# EUROPEAN PATENT APPLICATION

(11) **EP 2 858 335 A1**
(43) Date of publication of application: **08.04.2015**
(21) Application number: 12878480.8
(22) Date of filing: 08.08.2012
(51) Int. Cl.: H04M 1/274, G06F 17/30

(54) **MOBILE TERMINAL AND METHOD FOR IMPLEMENTING CUSTOMIZATION OF CONTACT ATTRIBUTE**

(30) Priority: 04.06.2012 CN 201210179314
(71) Applicant: ZTE Corporation, Shenzhen, Guangdong 518057 (CN)
(72) Inventor: ZHAO, Jin, Shenzhen Guangdong 518057 (CN)
(74) Representative: Zimmermann, Tankred Klaus
(86) International application number: PCT/CN2012/079802
(87) International publication number: WO 2013/181887

(57) **Abstract**

The present invention provides a mobile terminal and method for customizing contact properties. The mobile terminal comprises a User interaction entity, a database entity and an XML generation parsing entity, wherein the UI entity is configured to provide a user with property change operation of a contact; the database entity is configured to store all the information of the contact, comprising the change information of the contact, and the change information of a property and a property value of the contact; and the XML generation parsing entity is configured to write the contact properties into an XML file in an XML format to generate an XML file according to the data received by the UI entity. According to the mobile terminal and the method for customizing contact properties, a user can customize the contact properties and the contact properties customized by the user can be transmitted across platforms.

## Description

### Technical Field

The present invention relates to a mobile communication technology, in particular to a mobile terminal and a method for customizing contact properties.

### Background

With the development of the human society, the demand for a mobile terminal is growing, and the application, contact, is most widely used in the mobile terminal. At present, the amount of information mastered by the user is increasing, and moreover, with the rapid development of the intelligent terminal, the contact properties cannot be only limited to such single information as a name and a number, which cannot meet the requirements of the user on the contact application any more, therefore, the contact information saved by the user is not limited to the name and the number. Particularly for the user of the intelligent terminal, the requirements of the user cannot be met unless much contact information is stored such as birthday, workplace, Email and other information.

At present, a more popular operating system platform of a mobile terminal in the market limits the contact properties, and the contact properties are fixed in several types, namely, the number of contact properties has been fixed and cannot be added. However, with the increasing of amount of information required by the user, the properties of fixed several or dozens of contacts cannot completely cover the information that the user wants to save.

### Summary

To solve the problem, the present invention provides a mobile terminal and a method for customizing contact properties, by which a user can customize contact properties and the contact properties customized by the user can be transmitted across platforms.

The mobile terminal for customizing contact properties includes a User Interaction (UI) entity, a database entity and an Extensible Markup Language (XML) generation parsing entity, wherein the UI entity is configured to provide a user with a property change operation of a contact; the database entity is configured to store all information of the contact, wherein all the information of the contact includes change information of the contact, change information of a property of the contact, and change information of a property value of the contact; and the XML generation parsing entity is configured to write contact properties into an XML file in an XML format to generate an XML file according to data received by the UI entity.

In the XML generation parsing entity, the XML format is constructed in such a way that a key value is corresponding to a content value.

When the contact properties and values of the contact properties on the mobile terminal are transmitted between the mobile terminal and a cross-platform receiving terminal, the database entity may be further configured to provide the cross-platform receiving terminal with an interface so that the cross-platform receiving terminal may find values in columns corresponding to a contact property table from the database entity; and the XML generation parsing entity may be further configured to provide the cross-platform receiving terminal with an interface so that the cross-platform receiving terminal may acquire content values from corresponding key values after acquiring the corresponding XML file and further transmit the contact properties and the property values through the interface provided by the database entity.

Preferably, the mobile terminal may further include a transmission entity configured to transmit the XML file generated by the XML generation parsing entity to the cross-platform receiving terminal and acquire database data resources through the interface provided by the database entity to transmit them to the cross-platform receiving terminal.

The change information of the contact includes a contact added, a contact deleted and a contact modified. The property change operation of the contact includes adding, deleting and modifying the property and the property value of the contact.

The method for customizing contact properties of the present invention is provided. An UI entity, a database entity and an XML generation parsing entity is provided on a mobile terminal in the method, wherein the UI entity is configured to provide a user with property change operation of a contact; the database entity is configured to store all information of the contact, including change information of the contact, change information of a property of a contact, and change information of a property value of the contact; and the XML generation parsing entity is configured to write the contact properties into an XML file in an XML format to generate an XML file according to the data received by the UI entity.

In the XML generation parsing entity, the XML format is constructed in such a way that a key value is corresponding to a content value.

When the contact properties and the property values of the mobile terminal are transmitted to the cross-platform receiving terminal, the database entity may be further configured to provide the cross-platform receiving terminal with an interface so that the cross-platform receiving terminal may find values in columns corresponding to a contact property table from the database entity; and the XML generation parsing entity may be further configured to provide the cross-platform receiving terminal with an interface so that the cross-platform receiving terminal may acquire content values from corresponding key values after acquiring the corresponding XML file and further transmit the contact properties and the property values through the interface provided by the database entity.

The mobile terminal may further include a transmission entity, which is configured to transmit the XML file generated by the XML generation parsing entity to the cross-platform receiving terminal and acquire database data resources through the interface provided by the database entity to transmit them to the cross-platform receiving terminal.

The change information of the contact includes a contact added, a contact deleted and a contact modified. The property change operation of the contact includes adding, deleting and modifying the property and the property value of the contact.

The present invention has the following advantages: according to the mobile terminal and the method for customizing contact properties, the user can customize the contact properties, including adding, modifying and deleting the property and other operation; and the contact properties customized by the user can be transmitted across platforms, so as to meet the increasing requirements of the user on the contact property.

### Brief Description of the Drawings

Fig. 1 is a schematic diagram showing a mobile terminal for customizing contact properties in an embodiment of the present invention; and
Fig. 2 is a flowchart of a method for customizing contact properties in an embodiment of the present invention.

### Detailed Description of the invention

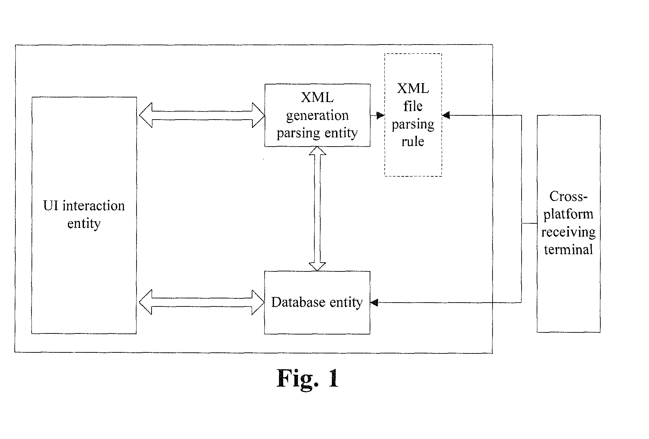

With reference to Figs. 1 to 2, a mobile terminal and a method for customizing contact properties in the present invention are described below in detail.

As shown in Fig. 1, a mobile terminal for customizing contact properties includes a User Interaction (UI) entity (hereafter referred to as UI entity), a database entity and an Extensible Markup Language (XML) generation parsing entity. The UI entity is configured to provide a user with the operation of adding, deleting and modifying a property and a property value of the contact. The user may add a contact, delete a contact, modify an existing contact or execute other operation through the UI entity so that the properties of respective contacts on the mobile terminal may be added, modified and deleted, thereby implementing customization. The database entity is configured to store all information of the contact, wherein all the information of the contact includes a contact added, deleted and modified and an added, deleted and modified property and property value of the contact. The database entity stories the customized information of all the contacts and provides an interface to the outside for querying the information. The XML generation parsing entity is associated with the UI entity and the database entity, and is configured to receive data after a user interacts with the UI entity and write the contact properties into an XML file in an XML format completely to generate an XML file.

In the XML generation parsing entity, the XML format is constructed in such a way that a key value is corresponding to a content value. Taking a mobile phone terminal with an Android platform as an example, it is assumed that the contact properties on the Android platform include name, number, Email address, post address and birthday. A property "favourite" is added by customization of the user. The XML generation parsing entity acquires these properties and defines them as key values, such as NAME, NUMBER, EMAIL, POST_ADDRESS, BIRTHDAY, FAVOURITE. The content values of these key values direct to columns in a contact property table, such as name-column, number-column, email_column, post_address_column, birthday_column, favourite_column. Thereby, after acquiring the XML file, an opposite terminal may acquire values from these key values and find the values in columns corresponding to a database contact table through the interface provided by the database, so that the contact properties and the property values of a local mobile phone terminal may be transmitted across platforms.

When the contact properties and the property values of the mobile terminal are transmitted to a cross-platform receiving terminal, the database entity may be further configured to provide the cross-platform receiving terminal with an interface so that the cross-platform receiving terminal may find values in the columns corresponding to a contact table from the database entity; and the XML generation parsing entity may be further configured to provide the cross-platform receiving terminal with an interface so that the cross-platform receiving terminal may acquire values from corresponding key values after acquiring a corresponding XML file and further transmit the contact properties and the property values through the interface provided by the database entity.

The mobile terminal may further include a transmission entity, which is configured to transmit the XML file generated by the XML generation parsing entity to the cross-platform receiving terminal, to acquire database data resources through the interface provided by the database entity, and to transmit the database data resources to the cross-platform receiving terminal. The service outside the cross-platform may acquire an XML file from the XML generation parsing entity and parse, according to the accessible XML file and a method for parsing an XML file format, the XML file completely to acquire complete property information of the contacts. Such information was customized by the user through the UI entity. After acquiring all the property values, the cross-platform receiving terminal queries a database through the accessible query interface provided by the database entity according to all the property information to acquire all the information of the contact completely, so that the contact properties customized by the user may be used universally across platforms.

A method for customizing contact properties is provided in an embodiment of the present invention. A UI entity, a database entity and an XML generation parsing entity is provided in a mobile terminal in the method, wherein the UI entity is configured to provide a user with property change operation of a contact; the database entity is configured to store all information of the contact, including the change information of the contact, change information of a property of the contact, and change information of a property value of the contact; and the XML generation parsing entity is configured to write the contact properties into an XML file in an XML format to generate an XML file according to the data received by the UI entity.

In the XML generation parsing entity, the XML format is constructed in such a way that a key value is corresponding to a content value. When the contact properties and the property values of the mobile terminal are transmitted to a cross-platform receiving terminal, the database entity may be further configured to provide the cross-platform receiving terminal with an interface so that the cross-platform receiving terminal may find values in columns corresponding to a contact property table from the database entity; and the XML generation parsing entity may be further configured to provide the cross-platform receiving terminal with an interface so that the cross-platform receiving terminal may acquire content values from corresponding key values after acquiring a corresponding XML file and further transmit the contact properties and the property values through the interface provided by the database entity.

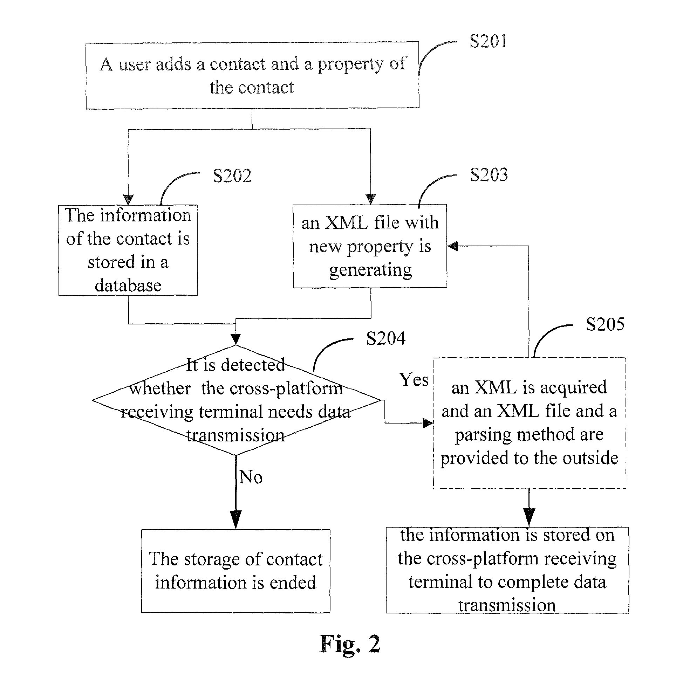

As shown in Fig. 2, the method for customizing contact properties in an embodiment of the present invention includes the following steps that:
Step 201: A user creates one piece of contact information through an UI entity, adds a property to original contact properties, and writes down a value corresponding to the property.
Step 202: The complete information of the contact (including the property and the property value added by the user) is inserted into a database to be saved.
Step 203: All the property information of the contact is written into an XML file in a specified XML format, and a method for parsing the XML file format is provided for external call.
Step 204: it is detected whether all the property information of the contact needs to be transmitted; if so, the XML file and a method for parsing the XML file format are provided to the outside; otherwise, the flow ends.
Step 205: A cross-platform receiving terminal acquires all the properties of the contact by parsing an XML, queries the complete information of the contact according to the properties through the interface provided by the database, and stores the information on the cross-platform terminal to complete data transmission. The cross-platform receiving terminal may be a Google server, a mobile phone terminal or a Personal Computer (PC) mobile terminal.

To sum up, according to the mobile terminal and the method for customizing contact properties, the user can customize the contact properties including adding, modifying and deleting the property and other operation; and the contact properties customized by the user may be transmitted across platforms, so as to meet the increasing requirements of the user on the contact property.

The present invention is described in detail as above in order that those skilled in the art can understand the present invention. Various changes and modifications can be made within the scope of the claims of the present invention and shall pertain to the protection scope of the present invention.

## Claims

1. A mobile terminal for customizing contact properties, **characterized by** comprising a User Interaction,(UI) entity, a database entity and an Extensible Markup Language (XML) generation parsing entity, wherein
the UI entity is configured to provide a user with a property change operation of a contact;
the database entity is configured to store all information of the contact, wherein all the information of the contact comprises change information of the contact, change information of a property of the contact, and change information of a property value of the contact; and
the XML generation parsing entity is configured to, according to data received by the UI entity, write contact properties into an XML file in an XML format to generate an XML file.

2. The mobile terminal for customizing the contact properties according to claim 1, **characterized in that** in the XML generation parsing entity, the XML format is constructed in such a way that a key value is corresponding to a content value.

3. The mobile terminal for customizing the contact properties according to claim 1, **characterized in that**
when the contact properties and values of the contact properties on the mobile terminal are transmitted between the mobile terminal and a cross-platform receiving terminal, the database entity is further configured to provide the cross-platform receiving terminal with an interface to enable the cross-platform receiving terminal to find values in columns, which are corresponding to a contact property table, from the database entity; and
the XML generation parsing entity is further configured to provide the cross-platform receiving terminal with an interface to enable the cross-platform receiving terminal to acquire content values from corresponding key values after acquiring the corresponding XML file, and to transmit the contact properties and the values of the contact properties through the interface provided by the database entity.

4. The mobile terminal for customizing the contact properties according to claim 3, **characterized by** further comprising a transmission entity configured to transmit the XML file generated by the XML generation parsing entity to the cross-platform receiving terminal, to acquire database data resources through the interface provided by the database entity, and to transmit the database data resources to the cross-platform receiving terminal.

5. The mobile terminal for customizing the contact properties according to any one of claims 1 to 3, **characterized in that**
the change information of the contact comprises a contact added, a contact deleted and a contact modified; and
the property change operation of the contact comprises adding, deleting and modifying the property and the property value of the contact.

6. A method for customizing a contact property, **characterized in that** a mobile terminal comprises a User Interaction (UI) entity, a database entity and an XML generation parsing entity, wherein the UI entity is configured to provide a user with property change operation of a contact; the database entity is configured to store all information of the contact, wherein all the information of the contact comprises the change information of the contact, the contact property, and change information of a value of contact property; and the XML generation parsing entity is configured to write the contact property into an XML file in an XML format to generate an XML file according to the data received by the UI entity.

7. The method for customizing the contact property according to claim 6, **characterized in that** in the XML generation parsing entity, the XML format is constructed in such a way that a key value is corresponding to a content value.

8. The method for customizing the contact property according to claim 6, **characterized in that** when the contact property and the value of the contact property of the mobile terminal are transmitted between the mobile terminal and a cross-platform receiving terminal, the database entity is further configured to provide the cross-platform receiving terminal with an interface to enable the cross-platform receiving terminal to find values in columns corresponding to a contact property table from the database entity; and the XML generation parsing entity is further configured to provide the cross-platform receiving terminal with an interface to enable the cross-platform receiving terminal to acquire content values according to corresponding key values after acquiring the corresponding XML file, and to transmit the contact properties and the values of the contact properties through the interface provided by the database entity.

9. The method for customizing the contact properties according to claim 8, **characterized in that** the mobile terminal further comprises a transmission entity configured to transmit the XML file generated by the XML generation parsing entity to the cross-platform receiving terminal, to acquire database data resources through the interface provided by the database entity, and to transmit the database data resources to the cross-platform receiving terminal.

10. The method for customizing the contact property according to any one of claims 6 to 8, **characterized in that** the change information of the contact comprises a contact added, a contact deleted and a contact modified; and the property change operation of the contact comprises adding, deleting and modifying the property and the property value of the contact.
